# EUROPEAN PATENT SPECIFICATION

(11) **EP 1 173 934 B1**
(45) Date of publication and mention of the grant of the patent: **16.06.2004**
(21) Application number: 00934965.5
(22) Date of filing: 20.04.2000
(51) Int. Cl.: H04B 1/707, H04L 25/03

(54) **DIGITAL RADIO SYSTEM**
DIGITALES FUNKSYSTEM
SYSTEME RADIO NUMERIQUE

(30) Priority: 20.04.1999 GB 9908959
(43) Date of publication of application: 23.01.2002
(73) Proprietor: Motorola Limited, Basingstoke, Hampshire RG22 4PD (GB)
(72) Inventor: PHILLIPS, Christopher, Frank, Camberley Surrey GU16 5RF (GB); GIBBS, Jonathan, Alastair, Hedge End Southampton SO30 2XF (GB)
(74) Representative: Treleven, Colin
(86) International application number: PCT/EP2000/003744
(87) International publication number: WO 2000/064064

(56) References cited:
- US-A- 5 177 766
- KLAUS DAVID, THORSTEN BENKNER: "DIGITALE MOBILFUNKSYSTEME" 1996 , B.G. TEUBNER , STUTTGART, GERMANY XP002147193 ISBN: 3-519-06181-3 page 259, line 27 -page 261, line 7 page 269, line 6 -page 271, line 14

## Description

### Technical Field

The present invention relates to the field of radio communication systems. In particular, the present invention relates to a digital radio system.

### Background

Digital radio transmission is used increasingly in the communication of voice and/or data. This is true of mobile- and portable radios in Personal Mobile Radio (PMR) systems such as TETRA and IDEN. This is also true of mobile telephone systems, such as GSM and CDMA telephone systems.

In these systems, a digital bit stream representing voice may be generated by, for example, digitising the output of a microphone. Alternatively, the bit stream for transmission may start out as digital information. An example of this would be the signal produced by a lap-top computer, which might be connected to a mobile telephone in order to transmit data to another such lap-top or a Local Area Network (LAN).

A digital radio signal may be transmitted simply as a serial stream of digital bits. These may be binary bits. Alternatively, these may be bits distributed amongst more than two levels. Systems employing more than two levels are referred to generally as M level digital systems, or 'M-ary' systems. If M=4, then the digital signal is a 'quaternary' signal. A quaternary signal consists of symbols which may take one of four different values.

A digital radio signal may be transmitted on a single frequency. Alternatively, the signal may be transmitted on a number of different frequencies, the transmitter hopping from one frequency to another.

Finally, digital radio systems are known in which an additional auxiliary signal is combined with the digital signal representing the voice or data, prior to transmission. The auxiliary digital signal may be an encryption signal.

Transmission of a digital signal in a CDMA mobile telephone system employs more than one of the techniques mentioned above. Firstly, the CDMA system employs frequency hopping. The signal is transmitted on one of a large number of different frequencies within a pre-defined bandwidth, the transmission moving rapidly from one frequency to another. The system also employs time division multiplexing, so that a number of different transmissions are interleaved in time on each frequency. Finally, the CDMA system employs encryption. The signal for transmission is combined with a complex auxiliary encryption signal. The encryption signal has a different symbol rate from that of the signal for transmission.

A CDMA receiver needs to be able to extract the original information signals, after their alteration by encryption, frequency hopping and time division multiplexing. Clearly, both the transmitter and receiver in a CDMA system are complex. The CDMA system is particularly adapted to transmitting signals from- and to many different users. Typically these users are mobile telephone users, and a large number of these users will be in communication with a CDMA base station.

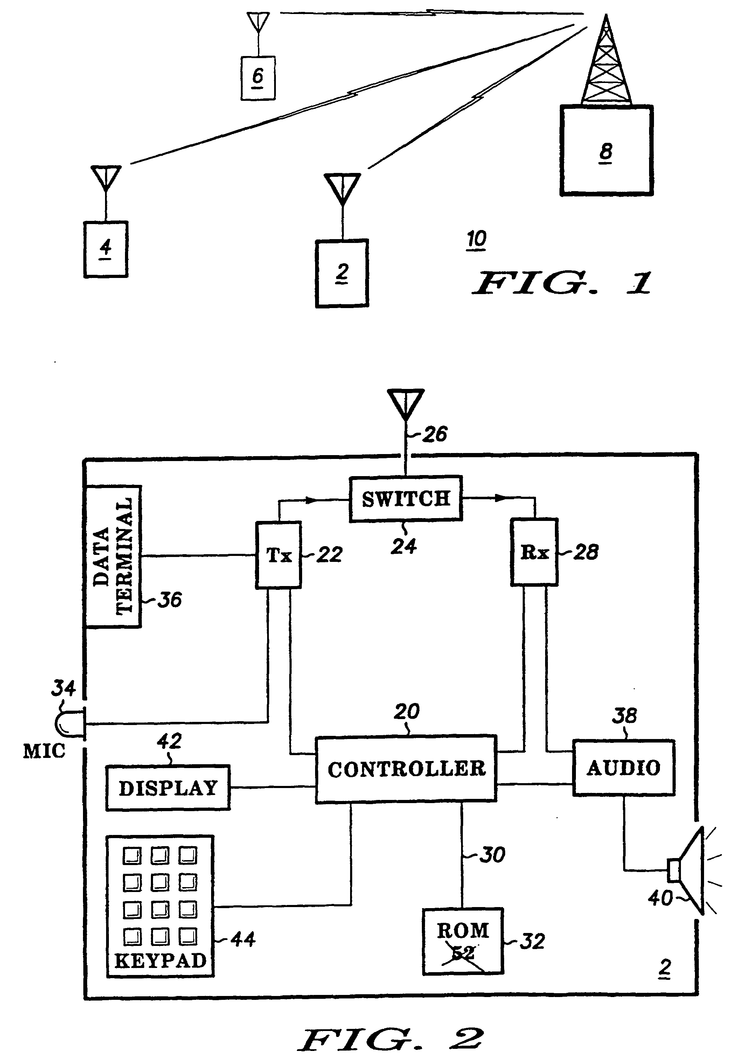

Figure 1 illustrates the general scheme of a PMR radio system 10. Portable radios 2, 4 and 6 can communicate with a base station 8. Radios 2, 4 and 6 could equally well be mobile radios mounted in vehicles. Each of the radios shown in figure 1 can communicate through base station 8 with one or more other radios. If radios 2, 4 and 6 are capable of direct mode operation, then they may communicate directly with one another or with other radios, without the communication link passing through base station 8.

PMR radios use different transmission techniques than GSM and CDMA mobile telephones. In the PMR field, a known problem is that some prior art PMR transmissions may at times comprise long sequences of the same symbol, for example a large number of consecutive zeros or a large number of consecutive '1's in a binary signal. This may be dis-advantageous for amplifier circuitry in the transmitter, which may require that there be changes in the symbols in order to function properly. A solution to this problem is already known in the prior art. The solution consists of combining the signal for transmission with an auxiliary signal comprising a pseudo-random sequence of digital bits. The pseudo-random sequence will 'break up' any long sequences of one symbol which may occur in the signal for transmission with which it is being combined. Thus the transmitter amplifier will be fed with a signal which does not show long sequences of one symbol. In this arrangement, the receiver must know which symbols the pseudo-random sequence contained, and subtract these from the received signal.

The PMR arrangement described above requires only that the auxiliary signal break up portions of the voice or data signal which do not show any variation in their symbols. The auxiliary signal can therefore be a simple pattern of varying symbols, which can be repeated indefinitely. This minimises the amount of memory capacity required to hold the auxiliary signal, both in the transmitting and in the receiving radios.

Published US patent US-A-5177766 concerns a method and system for generating digital clock timing in a receiver for use in direct spread-spectrum digital communication systems, wherein spread data is delivered from a transmitter to a receiver. The transmitter uses direct-sequence spreading codes for spreading the digital bits in the time frame. The same codes are used at the receiver to de-spread the received spread frames.

There is a need to improve upon these prior art arrangements.

### Summary of the Invention

A digital radio transmitter for transmitting data and/or speech in accordance with the invention comprises: means for generating a first digital signal at a pre-determined symbol rate, the first digital signal comprising data and/or speech for transmission; means for supplying a second digital signal at the said pre-determined symbol rate, the second digital signal comprising a pseudo-random data sequence; means for combining the first digital signal and the second digital signal to produce a third digital signal; a transmission circuit for transmitting the third digital signal; wherein the means for supplying the second digital signal are adapted to supply more than one short pseudo-random data sequence and to change between different short pseudo-random data sequences at predefined time points.

A method of randomising data for digital radio transmission in accordance with the invention comprises: generating a first digital signal at a pre-determined symbol rate, the first digital signal comprising data and/or speech for transmission; supplying a second digital signal at the said pre-determined symbol rate, the second digital signal comprising a pseudo-random data sequence; combining the first digital signal and the second digital signal to produce a third digital signal for transmission; and changing at predefined time points between different short pseudo-random data sequences as the second digital signal.

A digital radio receiver in accordance with the present invention, for receiving data and/or speech from a digital radio transmitter, comprises: a receiving circuit for receiving a third digital signal transmitted by the digital radio transmitter; means for supplying a second digital signal at a pre-determined symbol rate, the second digital signal comprising a pseudo-random data sequence; means for subtracting the second digital signal from the third digital signal to provide a first digital signal having the said pre-determined symbol rate; wherein the means for supplying the second digital signal are adapted to supply more than one short pseudo-random data sequence, the short pseudo-random data sequences being the same as those used in the transmitter and being supplied in the same order as in the transmitter; and wherein the means for supplying the second digital signal are adapted to change between different short pseudo-random data sequences at predefined time points, the predefined time points being the same as the predefined time points used to change between different short pseudo-random data sequences in the transmitter.

### Brief description of the drawings

**Figure 1** illustrates an arrangement of portable radios and a base station.
**Figure 2** illustrates a portable radio in accordance with the present invention.
**Figure 3** illustrates a first example of a transmission signal in accordance with the present invention.
**Figure 4** illustrates a second example of a transmission signal in accordance with the present invention.

### Detailed description of the preferred embodiment

Figure 2 illustrates a digital radio transmitter in accordance with the present invention.

The digital radio transmitter 2 of figure 2 can transmit data and/or speech. The digital radio transmitter comprises a microphone 34 and a data terminal 36, either or both of which may provide a signal for transmission by the radio. The signal from the microphone is digitised by transmission circuit 22. Microphone 34 and/or data terminal 36 therefore provide a first digital signal S1 comprising data and/or speech for transmission. Digital signal S1 has a pre-determined symbol rate.

The transmitter 2 also has a controller 20 and a read only memory (ROM) 32. Controller 20 may be a microprocessor. ROM 32 and controller 20 can supply a second digital signal S2. The second digital signal S2 is supplied at the same pre-determined symbol rate as the first digital signal S1.

The second digital signal S2 comprises a pseudo-random data sequence. This sequence comprises digital data pre-stored in ROM 32.

Transmission circuit 22 can combine the first digital signal S1 and the second digital signal S2 to produce a third digital signal S3. The resulting third digital signal S3 is transmitted via switch 24 and antenna 26.

ROM 32 contains digital data representing more than one short pseudo-random data sequence. Therefore ROM 32 and controller 20 can supply a second digital signal S2 which comprises a number of different, short pseudo-random data sequences, one after another. Controller 20 is adapted to change between supplying different short pseudo-random data sequences at predefined time points.

The arrangement described above therefore provides a transmitted signal which comprises speech and/or data, combined with successive ones of a set of pre-stored short pseudo-random data sequences. One clear advantage of this form of transmitted signal is that an eavesdropper, who intercepts the transmitted signal, cannot decode the speech and/or data.

The receiver to which the transmission is directed is provided with the pseudo-random data sequences which make up the second digital signal. The receiver also knows the pre-determined time points at which the short pseudo-random data sequences change in the transmitter.

The receiver is thus able to extract the voice and/or data signal S1 from the received signal, using the pseudo-random data sequences of S2. Thus an authorised receiver can receive the voice and/or data signal S1.

Although figure 2 shows a ROM 32 as a means for storage of the short pseudo-random data sequences, alternative means may be provided to supply the second digital signal. In particular, the signal S2 may be generated according to a particular algorithm as and when it is needed, rather than being pre-stored. This reduces the amount of memory required in radio 2.

The digital radio of figure 2 also comprises a display 42 and keypad 44, which serve as the user interface. Voice activation of the digital radio, or other means of interaction with a user, may also be employed.

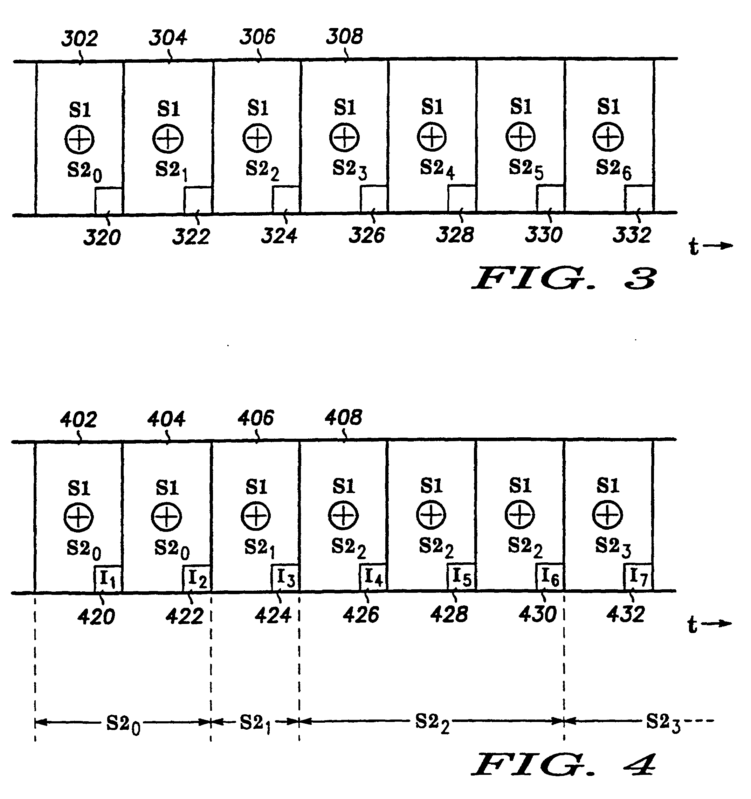

Figure 3 illustrates a first example of a transmission signal in accordance with the present invention.

The progression of time in figure 3 is from left to right. The elements with reference numerals 302, 304, 306 and 308 are successive frames of digital signal S3 for transmission. Signals S2₀- S2₆ are seven short pseudo-random data sequences.

In frame 302, signal S1 has been combined with signal S2₀. In this example, modulo 2 addition has been used for the combining step. In the next frame, frame 304, signal S1 has been combined with signal S2₁. In frame 306, signal S1 has been combined with signal S2₂. This pattern repeats until the final frame illustrated, where digital signal S1 is combined with signal S2₆.

Figure 3 therefore shows digital signal S1 being combined in successive frames with different short pseudo-random data sequences S2₀- S2₆. The different pseudo-random data sequences S2₀- S2₆ are some of those stored in the ROM 32, and together constitute signal S2 in this example. Beyond the portion of signal S3 illustrated in figure 3, other pseudo-random data sequences than S2₀-S2₆ may be combined with signal S1 in later frames.

The example shown in figure 3 shows the pre-defined time points, at which changes in the pseudo-random data sequences occur, coinciding with the frame changes of signal S3.

Typically, a portable or mobile PMR radio transmits on a particular channel that has been agreed with the receiver. In such a case, the transmission circuit transmits the third digital signal S3 on a single transmission frequency.

The signals used in a portable or mobile radio are likely to be binary digital signals. In this case, the first, second and third digital signals (S1, S2 and S3) are binary digital signals, and the transmission circuit 22 combines the first and second (S1 and S2) digital signals by performing modulo 2 addition.

In a generalised case however, a digital radio transmitter may employ signals with M levels. The first, second and third digital signals are then M-ary digital signals, and the transmission circuit 22 combines the first and second digital signals by performing modulo M addition. If M=4, then the transmission circuit may also transmit the third digital signal S3 using 4FSK modulation.

The ROM 32 in figure 2 may store particular, pre-selected pseudo-random data sequences chosen from the 'set' of all possible pseudo-random data sequences. This 'set' includes all possible combinations of symbols which have the length chosen for each short pseudo-random data sequence in digital signal S2. ROM 32 may in particular store pseudo-random data sequences pre-selected as having a balance of different symbols that enables optimised demodulation of the transmitted signal. Such pre-selected pseudo-random data sequences would optimise the demodulation performance of a receiver, irrespective of the data sequence of the first data signal S1. Even if signal S1 comprised a long series of zeros, for example, the decoding circuitry in the receiver would have no difficulty in decoding the received signal.

In order to make 'eavesdropping' on the transmitted signal S3 even more difficult, the controller 20 and ROM 32 may be adapted to supply the different short pseudo-random data sequences in a pseudo-random order.

Referring to figure 3, the suffixes 1-6 for the pseudo-random data sequences S2₀- S2₆ have simply been chosen to be in numerical order for clarity of illustration. These pseudo-random data sequences may in fact be chosen from amongst several thousand short pseudo-random data sequences stored in ROM 32, the selection being in a pseudo-random order.

The controller 20 and ROM 32 may be adapted to change from supplying one short pseudo-random data sequence to supplying another short pseudo-random data sequence at time points varying in time in a pseudo-random manner. These time points, varying in time in a pseudo-random manner, may be varied by controller 20 to be synchronised with the inherent framing of the digital signal frames of the third digital signal S3. This would mean that a particular short pseudo-random data sequence will be supplied by controller 20 for a time period equal to an integer number of digital signal frames of the third digital signal S3. This time period would also begin at the start of a frame of digital signal S3, and end at the end of a frame of digital signal S3. Figure 4 illustrates an example of such a signal S3.

In figure 4, each of frames 402, 404, 406 and 408 once more consists of signal S1, having been modulo 2 added to a short pseudo-random data sequence which makes up part of digital signal S2. In contrast to figure 3 however, in figure 4 a particular pseudo-random data sequence in the signal S2 may last for more than one frame of the signal S3. In figure 4, signal S2₀ lasts for two frames of signal S3, these being frames 402 and 404. Following this, controller 20 changes the pseudo-random data sequence making up digital signal S2 to signal S2₁ for a single frame, frame 406. After this, signal S2 comprises three frames of pseudo-random data sequence S2₂ and then changes to pseudo-random data sequence S2₃.

The length of time during which a particular short pseudo-random data sequence makes up the second digital signal S2 can thus vary in a random or a pseudo-random manner. However, as illustrated in figure 4, this variation can be constrained to whole frames of the transmitted signal S3.

A portable or mobile radio may communicate with several other PMR radio units simultaneously. In fact, radios may join a group of other radios part way through a communication. The invention has therefore been further adapted to allow receiving radios to receive a transmission that has already begun.

This may be achieved by multiplexing synchronisation data with the transmitted signal S3, whereby one or more radio receivers can synchronise to the pseudo-random data sequence at the beginning of, or during, transmission of the transmitted signal. The synchronisation data may identify the current pseudo-random data sequence which makes up signal S2. Such synchronisation data has been indicated in figure 3 as elements 320, 322, 324, 326, 328, 330 and 332. In figure 4, the synchronisation data is shown as elements 420-432.

Additionally, or alternatively, the synchronisation data may simply identify the order number of the current pseudo-random data sequence in a pre-defined order of transmission of the short pseudo-random data sequences.

In a further adaptation of the digital radio transmitter of the invention, the data signal fed into data terminal 36 for transmission may comprise one or more frames of image data. The image data may alternatively be generated within the PMR unit 2 shown in figure 2. This is an arrangement known from 'third generation' radio communications technology, and is not explained in detail here.

The method of operation of the digital radio of the invention can be considered to be a randomising of data for transmission.

Considering the embodiment illustrated in Figure 2 once again, microphone 34 or an external source connected to data terminal 36 generates a first digital signal S1 at a pre-determined symbol rate. The first digital signal S1 comprises data and/or speech for transmission.

ROM 32 and controller 20 supply a second digital signal S2 at the same pre-determined symbol rate as S1. The second digital signal S2 comprises a pseudo-random data sequence.

Transmission circuit 22 combines the first digital signal S1 and the second digital signal S2 to produce a third digital signal S3 for transmission.

In accordance with the invention, controller 20 and ROM 32 change at predefined time points between supplying different short pseudo-random data sequences as the second digital signal S2.

The symbols making up digital signal S3 for transmission are therefore effectively randomised. An eavesdropper listening in to the communication from the radio will hear a random assortment of digital symbols. These symbols are unintelligible without knowledge of both the short pseudo-random data sequences which made up signal S2 in the transmitter, and knowledge of the pre-defined time points at which the signal S2 changed from one short pseudo-random data sequence to another.

The detailed explanation of figures 2-4 above provides details of further enhancements to the inventive method.

The third digital signal S3 is transmitted by the digital radio of the invention. Clearly, another radio must be adapted to receive and decode the transmitted signal. Thus the present invention also comprises a digital radio receiver. The radio 2 shown in figure 2 is equipped with circuitry capable of receiving a signal such as third digital signal S3.

A digital radio receiver in accordance with the invention, as illustrated in figure 2, comprises the following elements:
(i) A receiving circuit 28 for receiving a signal of the form of the third digital signal S3 referred to above in connection with the digital radio transmitter;
(ii) Controller 20 and ROM 32 for supplying the second digital signal S2 at a pre-determined symbol rate. Controller 20 and ROM 32 are adapted to provide as the second digital signal S2 a pseudo-random data sequence comprising more than one short pseudo-random data sequence. The short pseudo-random data sequences are the same as those used in the transmitter and are supplied in the same order as in the transmitter. Controller 20 and ROM 32 are also adapted to change between supplying different short pseudo-random data sequences at predefined time points, the predefined time points being the same as those used to change between the short pseudo-random data sequences combined with the first digital signal S1 in the transmitter;
(iii) The receiving circuit 28 subtracting the second digital signal S2 from the third digital signal S3 to provide a first digital signal S1 having the said pre-determined symbol rate.

To complete the receiver, the receiver as shown in figure 2 comprises audio circuit 38 and speaker 40. Audio circuit 38 and speaker 40 combine to deliver a voice signal to the user of the receiver. This voice signal is that contained in signal S1, and corresponds to the voice signal received in microphone 34 of the transmitter.

The receiver may comprise circuitry to further process data portions of signal S1. This circuitry may comprise the display 42 shown on figure 2. Although not shown in figure 2, the circuitry may also or alternatively comprise an output port for supplying received data to an externally connected device, such as a lap-top computer.

## Claims

1. A digital radio transmitter for transmitting data and/or speech, the digital radio transmitter comprising:
means for generating a first digital signal (S1) at a pre-determined symbol rate, the first digital signal (S1) comprising data and/or speech for transmission;
means for supplying a second digital signal (S2) at the said pre-determined symbol rate, the second digital signal (S2) comprising a pseudo-random data sequence;
means for combining the first digital signal (S1) and the second digital signal (S2) to produce a third digital signal (S3);
a transmission circuit, for transmitting the third digital signal (S3);
wherein the means for supplying the second digital signal (S2) are adapted to supply more than one short pseudo-random data sequence; and
wherein the means for supplying the second digital signal (S2) are adapted to change between different short pseudo-random data sequences at predefined time points.

2. A digital radio transmitter in accordance with claim 1, wherein
the transmission circuit transmits the third digital signal (S3) on a single transmission frequency.

3. A digital radio transmitter in accordance with claim 1 or claim 2, wherein
the first (S1), second (S2) and third (S3) digital signals are binary digital signals, and the means for combining the first (S1) and second (S2) digital signals perform modulo 2 addition.

4. A digital radio transmitter in accordance with claim 1 or claim 2, wherein
the first (S1), second (S2) and third (S3) digital signals are M-ary digital signals, and the means for combining the first (S1) and second (S2) digital signals perform modulo M addition.

5. A digital radio transmitter in accordance with claim 4, wherein
M=4, and the transmission circuit employs 4FSK modulation.

6. A digital radio transmitter in accordance with any previous claim, further comprising:
means for storing more than one short pseudo-random data sequence, whereby the means for storing stores a set of short pseudo-random data sequences pre-selected from the set of all possible pseudo-random data sequences, the pre-selected pseudo-random data sequences having a balance of different symbols that enables optimised demodulation of the transmitted signal.

7. A digital radio transmitter in accordance with any previous claim,
wherein the means for supplying the second digital signal (S2) are adapted to supply the different short pseudo-random data sequences in a pseudo-random order.

8. A digital radio transmitter in accordance with any previous claim, wherein
the means for supplying the second digital signal (S2) are adapted to change between different short pseudo-random data sequences at time points varying in time in a pseudo-random manner.

9. A digital radio transmitter in accordance with any previous claim, wherein
the means for supplying the second digital signal (S2) are adapted to change between different short pseudo-random data sequences at predefined time points synchronised by the inherent framing of the digital signal frames of the third digital signal (S3).

10. A digital radio transmitter in accordance with any previous claim, further comprising:
means for multiplexing synchronisation data with the transmitted signal, whereby one or more radio receivers can synchronise to the pseudo-random data sequence at the beginning of, or during, transmission of the transmitted signal.

11. A digital radio transmitter in accordance with claim 10, wherein
the synchronisation data identifies the current short pseudo-random data sequence and/or the order number of the current short pseudo-random data sequence in a pre-defined order of transmission of the short pseudo-random data sequences.

12. A digital radio transmitter in accordance with any previous claim, wherein
the data for transmission comprises one or more frames of image data.

13. A method of randomising data for digital radio transmission, comprising
generating a first digital signal (S1) at a pre-determined symbol rate, the first digital signal (S1) comprising data and/or speech for transmission;
supplying a second digital signal (S2) at the said pre-determined symbol rate, the second digital signal (S2) comprising a pseudo-random data sequence;
combining the first digital signal (S1) and the second digital signal (S2) to produce a third digital signal (S3) for transmission;
changing at predefined time points between different short pseudo-random data sequences as the second digital signal (S2).

14. A method of randomising data for digital radio transmission in accordance with claim 13, wherein
the first (S1), second (S2) and third (S3) digital signals are binary digital signals, and the step of combining the first (S1) and second (S2) digital signals comprises modulo 2 addition.

15. A method of randomising data for digital radio transmission in accordance with claim 13, wherein
the first (S1), second (S2) and third (S3) digital signals are M-ary digital signals, and the step of combining the first (S1) and second (S2) digital signals comprises modulo M addition.

16. A method of randomising data for digital radio transmission in accordance with claim 15, wherein
M=4, and the third digital signal (S3) is transmitted with 4FSK modulation.

17. A method of randomising data for digital radio transmission in accordance with any of claims 13-16, whereby
the short pseudo-random data sequences are pre-selected from the set of all possible pseudo-random data sequences, the pre-selected pseudo-random data sequences having a balance of different symbols that enables optimised demodulation of the transmitted signal.

18. A method of randomising data for digital radio transmission in accordance with any of claims 13-17,
wherein the different short pseudo-random data sequences are supplied in a pseudo-random order.

19. A method of randomising data for digital radio transmission in accordance with any of claims 13-18, wherein
changes between different short pseudo-random data sequences occur at time points varying in time in a pseudo-random manner.

20. A method of randomising data for digital radio transmission in accordance with any of claims 13-19, wherein
changes between different short pseudo-random data sequences occur at predefined time points synchronised by the inherent framing of the digital signal frames of the third digital signal (S3).

21. A method of randomising data for digital radio transmission in accordance with any of claims 13-20, further comprising:
multiplexing synchronisation data with the transmitted signal, whereby one or more radio receivers can synchronise to the pseudo-random data sequence at the beginning of, or during, transmission of the third digital signal, the synchronisation data identifying the current short pseudo-random data sequence and/or the order number of the current short pseudo-random data sequence in a pre-defined order of transmission of the short pseudo-random data sequences.

22. A method of randomising data for digital radio transmission in accordance with any of claims 13-21, wherein
the data for transmission comprises one or more frames of image data.

23. A digital radio receiver for receiving data and/or speech from a digital radio transmitter, the digital radio receiver comprising:
a receiving circuit for receiving a third digital signal (S3) transmitted by the digital radio transmitter;
means for supplying a second digital signal (S2) at a pre-determined symbol rate, the second digital signal (S2) comprising a pseudo-random data sequence;
means for subtracting the second digital signal (S2) from the third digital signal (S3) to provide a first digital signal (S1) having the said pre-determined symbol rate;
wherein the means for supplying the second digital signal (S2) are adapted to supply more than one short pseudo-random data sequence, the short pseudo-random data sequences being the same as those used in the transmitter and being supplied in the same order as in the transmitter; and
wherein the means for supplying the second digital signal (S2) are adapted to change between different short pseudo-random data sequences at predefined time points, the predefined time points being the same as the predefined time points used to change between different short pseudo-random data sequences in the transmitter.

## Patentansprüche

1. Digitaler Funksender zum Übertragen von Daten und/oder Sprache, wobei der digitale Funksender folgendes umfasst:
Mittel zum Erzeugen eines ersten digitalen Signals (S1) bei einer vorbestimmten Symbolrate, wobei das erste digitale Signal (S1) Daten und/oder Sprache für eine Übertragung umfasst;
Mittel zum Bereitstellen eines zweiten digitalen Signals (S2) bei der vorbestimmten Symbolrate, wobei das zweite digitale Signal (S2) eine Pseudozufallsdatensequenz umfasst;
Mittel zum Kombinieren des ersten digitalen Signals (S1) und des zweiten digitalen Signals (S2), um ein drittes digitales Signal (S3) zu erzeugen;
eine Übertragungsschaltung zum Übertragen des dritten digitalen Signals (S3);
wobei die Mittel zum Bereitstellen des zweiten digitalen Signals (S2) geeignet sind, mehr als eine kurze Pseudozufallsdatensequenz bereitzustellen; und
bei dem die Mittel zum Bereitstellen des zweiten digitalen Signals (S2) geeignet sind, zu vordefinierten Zeitpunkten zwischen verschiedenen kurzen Pseudozufallsdatensequenzen zu wechseln.

2. Digitaler Funksender gemäß Anspruch 1, bei dem
die Übertragungsschaltung das dritte digitale Signal (S3) auf einer einzelnen Übertragungsfrequenz überträgt.

3. Digitaler Funksender gemäß Anspruch 1 oder Anspruch 2, bei dem
das erste (S1), zweite (S2) und dritte (S3) digitale Signal binäre digitale Signale sind und die Mittel zum Kombinieren des ersten (S1) und zweiten (S2) digitalen Signals eine Modulo-2-Addition durchführen.

4. Digitaler Funksender gemäß Anspruch 1 oder Anspruch 2, bei dem
das erste (S1), zweite (S2) und dritte (S3) digitale Signal M-adische digitale Signale sind und die Mittel zum Kombinieren des ersten (S1) und zweiten (S2) digitalen Signals eine Modulo-M-Addition durchführen.

5. Digitaler Funksender gemäß Anspruch 4, bei dem
M=4 und die Übertragungsschaltung eine 4FSK-Modulation einsetzt.

6. Digitaler Funksender gemäß einem der vorherigen Ansprüche, der weiterhin umfasst:
Mittel zum Speichern von mehr als einer kurzen Pseudozufallsdatensequenz, wobei die Mittel zum Speichern einen Satz kurzer Pseudozufallsdatensequenzen speichern, der aus dem Satz aller möglichen Pseudozufallsdatensequenzen vorausgewählt wurde, wobei die vorausgewählten Pseudozufallsdatensequenzen ein Gleichgewicht verschiedener Symbole haben, was eine optimale Demodulation des übertragenen Signals gewährleistet.

7. Digitaler Funksender gemäß einem der vorherigen Ansprüche,
bei dem die Mittel zum Bereitstellen des zweiten digitalen Signals (S2) geeignet sind, die verschiedenen kurzen Pseudozufallsdatensequenzen in einer Pseudozufallsreihenfolge bereitzustellen.

8. digitaler Funksender gemäß einem der vorherigen Ansprüche, bei dem
die Mittel zum Bereitstellen des zweiten digitalen Signals (S2) geeignet sind, zwischen verschiedenen kurzen Pseudozufallsdatensequenzen zu Zeitpunkten zu wechseln, die hinsichtlich der Zeit in einer Pseudozufallsweise variieren.

9. Digitaler Funksender gemäß einem der vorherigen Ansprüche, bei dem
die Mittel zum Bereitstellen des zweiten digitalen Signals (S2) geeignet sind, zwischen verschiedenen kurzen Pseudozufallsdatensequenzen zu vordefinierten Zeitpunkten zu wechseln, die durch das inhärente Rahmen der digitalen Signalrahmen des dritten digitalen Signals (S3) synchronisiert werden.

10. Digitaler Funksender gemäß einem der vorherigen Ansprüche, der weiterhin umfasst:
Mittel zum Multiplexen von Synchronisationsdaten mit dem übertragenen Signal, wodurch ein oder mehrere Funkempfänger am Anfang oder während der Übertragung des übertragenen Signals auf die Pseudozufallsdatensequenz synchronisieren können.

11. Digitaler Funksender gemäß Anspruch 10, bei dem
die Synchronisationsdaten die aktuelle kurze Pseudozufallsdatensequenz und/oder die Ordnungszahl der aktuellen kurzen Pseudozufallsdatensequenz in einer vordefinierten Reihenfolge der Übertragung der kurzen Pseudozufallsdatensequenzen identifiziert.

12. Digitaler Funksender gemäß einem der vorherigen Ansprüche, bei dem
die Daten für die Übertragung einen oder mehrere Rahmen von Bilddaten umfassen.

13. Verfahren zum Datenrandomisieren für eine digitale Funkübertragung, das Folgendes umfasst:
Erzeugen eines ersten digitalen Signals (S1) bei einer vorbestimmten Symbolrate, wobei das erste digitale Signal (S1) Daten und/oder Sprache für eine Übertragung umfasst;
Bereitstellen eines zweiten digitalen Signals (S2) bei der vorbestimmten Symbolrate, wobei das zweite digitale Signal (S2) eine Pseudozufallsdatensequenz umfasst;
Kombinieren des ersten digitalen Signals (S1) und des zweiten digitalen Signals (S2), um ein drittes digitales Signal (S3) für die Übertragung zu erzeugen;
Wechseln zwischen verschiedenen kurzen Pseudozufallsdatensequenzen als das zweite digitale Signal (S2) zu vordefinierten Zeitpunkten.

14. Verfahren zum Datenrandomisieren für eine digitale Funkübertragung gemäß Anspruch 13, bei dem
das erste (S1), zweite (S2) und dritte (S3) digitale Signal binäre digitale Signale sind und der Schritt des Kombinierens des ersten (S1) und zweiten (S2) digitalen Signals eine Modulo-2-Addition umfasst.

15. Verfahren zum Datenrandomisieren für eine digitale Funkübertragung gemäß Anspruch 13, bei dem
das erste (S1), zweite (S2) und dritte (S3) digitale Signal M-adische digitale Signale sind und der Schritt des Kombinierens des ersten (S1) und zweiten (S2) digitalen Signals eine Modulo-M-Addition umfasst.

16. Verfahren zum Datenrandomisieren für eine digitale Funkübertragung gemäß Anspruch 15, bei dem
M=4 und das dritte digitale Signal (S3) mit einer 4FSK-Modulation übertragen wird.

17. Verfahren zum Datenrandomisieren für eine digitale Funkübertragung gemäß einem der Ansprüche 13-16, bei dem
die kurzen Pseudozufallsdatensequenzen aus dem Satz aller möglichen Pseudozufallsdatensequenzen vorausgewählt werden, wobei die vorausgewählten Pseudozufallsdatensequenzen ein Gleichgewicht verschiedener Symbole haben, das eine optimale Demodulation des übertragenen Signals gewährleistet.

18. Verfahren zum Datenrandomisieren für eine digitale Funkübertragung gemäß einem der Ansprüche 13-17,
bei dem die verschiedenen kurzen Pseudozufallsdatensequenzen in einer Pseudozufallsreihenfolge bereitgestellt werden.

19. Verfahren zum Datenrandomisieren für eine digitale Funkübertragung gemäß einem der Ansprüche 13-18, bei dem
Wechsel zwischen verschiedenen kurzen Pseudozufallsdatensequenzen zu Zeitpunkten auftreten, die hinsichtlich der Zeit in einer Pseudozufallsweise variieren.

20. Verfahren zum Datenrandomisieren für eine digitale Funkübertragung gemäß einem der Ansprüche 13-19, bei dem
Wechsel zwischen verschiedenen kurzen Pseudozufallsdatensequenzen zu vordefinierten Zeitpunkten auftreten, die durch das inhärente Rahmen der digitalen Signalrahmen des dritten digitalen Signals (S3) synchronisiert werden.

21. Verfahren zum Datenrandomisieren für eine digitale Funkübertragung gemäß einem der Ansprüche 13-20, das weiterhin umfasst:
Multiplexen von Synchronisationsdaten mit dem übertragenen Signal, wodurch ein oder mehrere Funkempfänger am Anfang oder während der Übertragung des dritten digitalen Signals auf die Pseudozufallsdatensequenz synchronisieren können, wobei die Synchronisationsdaten die aktuelle kurze Pseudozufallsdatensequenz und/oder die Ordnungszahl der aktuellen kurzen Pseudozufallssequenz in einer vordefinierten Reihenfolge der Übertragung der kurzen Pseudozufallsdatensequenzen identifizieren.

22. Verfahren zum Datenrandomisieren für eine digitale Funkübertragung gemäß einem der Ansprüche 13-21, bei dem
die Daten für die Übertragung einen oder mehrere Rahmen von Bilddaten umfassen.

23. Digitaler Funkempfänger zum Empfangen von Daten und/oder Sprache von einem digitalen Funksender, wobei der digitale Funkempfänger folgendes umfasst:
eine Empfängerschaltung zum Empfangen eines dritten digitalen Signals (S3), das durch den digitalen Funksender übertragen wird;
Mittel zum Bereitstellen eines zweiten digitalen Signals (S2) bei einer vorbestimmten Symbolrate, wobei das zweite digitale Signal (S2) eine Pseudozufallsdatensequenz umfasst;
Mittel zum Subtrahieren des zweiten digitalen Signals (S2) von dem dritten digitalen Signal (S3), um ein erstes digitales Signal (S1) zur Verfügung zu stellen, das die vorbestimmte Symbolrate aufweist;
wobei die Mittel zum Bereitstellen des zweiten digitalen Signals (S2) geeignet sind, mehr als eine kurze Pseudozufallsdatensequenz bereitzustellen, wobei die kurze Pseudozufallsdatensequenzen dieselben sind wie jene, die in dem Sender verwendet werden, und in derselben Reihenfolge bereitgestellt werden wie in dem Sender; und
wobei die Mittel zum Bereitstellen des zweiten digitalen Signals (S2) geeignet sind, zwischen verschiedenen kurzen Pseudozufallsdatensequenzen zu vordefinierten Zeitpunkten zu wechseln, wobei die vordefinierten Zeitpunkte dieselben sind wie die vordefinierten Zeitpunkte, die verwendet werden, um zwischen verschiedenen kurzen Pseudozufallsdatensequenzen in dem Sender zu wechseln.

## Revendications

1. Radioémetteur numérique pour émettre des données et/ou une parole, le radioémetteur numérique comprenant :
des moyens pour générer un premier signal numérique (S1) à une fréquence de symboles prédéterminée, le premier signal numérique (S1) comprenant des données et/ou une parole pour émission ;
des moyens pour délivrer un deuxième signal numérique (S2) à ladite fréquence de symboles prédéterminée, le deuxième signal numérique (S2) comprenant une séquence de données pseudo-aléatoire ;
des moyens pour combiner le premier signal numérique (S1) et le deuxième signal numérique (S2) afin de produire un troisième signal numérique (S3) ;
un circuit d'émission, pour émettre le troisième signal numérique (S3) ;
dans lequel les moyens pour délivrer le deuxième signal numérique (S2) sont adaptés pour délivrer plusieurs séquences de données pseudo-aléatoires courtes ; et
dans lequel des moyens pour délivrer le deuxième signal numérique (S2) sont adaptés pour passer par des séquences de données pseudo-aléatoires courtes à des instants prédéfinis.

2. Radioémetteur numérique selon la revendication 1, dans lequel :
le circuit d'émission émet le troisième signal numérique (S3) sur une seule fréquence d'émission.

3. Radioémetteur selon la revendication 1 ou 2, dans lequel :
les premier (S1), deuxième (S2) et troisième (S3) signaux numériques sont des signaux numériques binaires, et les moyens pour combiner les premier (S1) et deuxième (S2) signaux numériques effectuent une addition module 2.

4. Radioémetteur numérique selon la revendication 1 ou 2, dans lequel :
les premier (S1), deuxième (S2) et troisième (S3) signaux numériques sont des signaux numériques M-aires, et les moyens pour combiner les premier (S1) et deuxième (S2) signaux numériques effectuent une addition modulo M.

5. Radioémetteur numérique selon la revendication 4, dans lequel :
M = 4, et le circuit d'émission utilise une modulation 4FSK.

6. Radioémetteur numérique selon l'une quelconque des revendications précédentes, comprenant en outre :
des moyens pour mémoriser plusieurs séquences de données pseudo-aléatoires courtes, moyennant quoi les moyens pour mémoriser mémorisent un ensemble de séquences de données pseudo-aléatoires courtes présélectionnées dans l'ensemble de toutes les séquences de données pseudo-aléatoires possibles, les séquences de données pseudo-aléatoires présélectionnées présentant un équilibre des différents symboles qui permet une démodulation optimisée du signal émis.

7. Radioémetteur numérique selon l'une quelconque des revendications précédentes,
dans lequel les moyens pour délivrer le deuxième signal numérique (S2) sont adaptés pour délivrer les différentes séquences de données pseudo-aléatoires courtes dans un ordre pseudo-aléatoire.

8. Radioémetteur numérique selon l'une quelconque des revendications précédentes, dans lequel :
les moyens pour délivrer le deuxième signal numérique (S2) sont adaptés pour passer par différentes séquences de données pseudo-aléatoires courtes à des instants variant dans le temps d'une manière pseudo-aléatoire.

9. Radioémetteur numérique selon l'une quelconque des revendications précédentes, dans lequel :
les moyens pour délivrer le deuxième signal numérique (S2) sont adaptés pour passer par différentes séquences de données pseudo-aléatoires courtes à des instants prédéfinis synchronisés avec l'alignement de trame inhérent des trames de signal numérique du troisième signal numérique (S3).

10. Radioémetteur numérique selon l'une quelconque des revendications précédentes, comprenant en outre :
des moyens pour multiplexer des données de synchronisation avec le signal émis,
moyennant quoi un ou plusieurs radiorécepteurs peuvent se synchroniser avec la séquence de données pseudo-aléatoire au début ou au cours de l'émission du signal émis.

11. Radioémetteur numérique selon la revendication 10, dans lequel :
les données de synchronisation identifient la séquence de données pseudo-aléatoire courte actuelle et/ou le numéro d'ordre de la séquence de données pseudo-aléatoire courte actuelle dans un ordre prédéfini d'émission des séquences de données pseudo-aléatoires courtes.

12. Radioémetteur numérique selon l'une quelconque des revendications précédentes, dans lequel :
les données pour émission comprennent une ou plusieurs trames de données d'image.

13. Procédé de génération aléatoire de données pour une radioémission numérique, comprenant :
la génération d'un premier signal numérique (S1) à une fréquence de symboles prédéterminée, le premier signal numérique (S1) comprenant des données et/ou une parole pour émission ;
la fourniture d'un deuxième signal numérique (S2) à ladite fréquence de symboles prédéterminée, le deuxième signal numérique (S2) comprenant une séquence de données pseudo-aléatoire ;
la combinaison du premier signal numérique (S1) et du deuxième signal numérique (S2) afin de produire un troisième signal numérique (S3) pour émission ;
le passage à des instants prédéfinis par différentes séquences de données pseudo-aléatoires courtes en tant que deuxième signal numérique (S2).

14. Procédé de génération aléatoire de données pour une radioémission numérique selon la revendication 13, dans lequel :
les premier (S1), deuxième (S2) et troisième (S3) signaux numériques sont des signaux numériques binaires, et l'étape de combinaison des premier (S1) et deuxième (S2) signaux numériques comprend une addition modulo 2.

15. Procédé de génération aléatoire de données pour une radioémission numérique selon la revendication 13, dans lequel :
les premier (S1), deuxième (S2) et troisième (S3) signaux numériques sont des signaux numériques M-aires, et l'étape de combinaison des premier (S1) et deuxième (S2) signaux numériques comprend une addition modulo M.

16. Procédé de génération aléatoire de données pour une radioémission numérique selon la revendication 15, dans lequel :
M = 4, et le troisième signal numérique (S3) est émis avec une modulation 4FSK.

17. Procédé de génération aléatoire de données pour une radioémission numérique selon l'une quelconque des revendications 13 à 16, moyennant quoi
les séquences de données pseudo-aléatoires courtes sont présélectionnées dans l'ensemble de toutes les séquences de données pseudo-aléatoires possibles, les séquences de données pseudo-aléatoires présélectionnées présentant un équilibre des différents symboles qui permet une démodulation optimisée du signal émis.

18. Procédé de génération aléatoire de données pour une radioémission numérique selon l'une quelconque des revendications 13 à 17,
dans lequel les différentes séquences de données pseudo-aléatoires courtes sont délivrées dans un ordre pseudo-aléatoire.

19. Procédé de génération aléatoire de données pour une radioémission numérique selon l'une quelconque des revendications 13 à 18, dans lequel :
le passage par différentes séquences de données pseudo-aléatoires courtes se produit à des instants variant dans le temps d'une manière pseudo-aléatoire.

20. Procédé de génération aléatoire de données pour une radioémission numérique selon l'une quelconque des revendications 13 à 19, dans lequel :
le passage par différentes séquences de données pseudo-aléatoires courtes se produit à des instants prédéfinis synchronisés par l'alignement de trame inhérent des trames de signaux numériques du troisième signal numérique (S3).

21. Procédé de génération aléatoire de données pour une radioémission numérique selon l'une quelconque des revendications 13 à 20, comprenant en outre :
le multiplexage de données de synchronisation avec le signal émis, moyennant quoi un ou plusieurs radiorécepteurs peuvent se synchroniser avec la séquence de données pseudo-aléatoire au début ou au cours de l'émission du troisième signal numérique, les données de synchronisation identifiant la séquence de données pseudo-aléatoire courte actuelle et/ou le numéro d'ordre de la séquence de données pseudo-aléatoire courte actuelle dans un ordre d'émission prédéfini des séquences de données pseudo-aléatoires courtes.

22. Procédé de génération aléatoire de données pour une radioémission numérique selon l'une quelconque des revendications 13 à 21, dans lequel :
les données pour émission comprennent une ou plusieurs trames de données d'image.

23. Radiorécepteur numérique pour recevoir des données et/ou une parole d'un radioémetteur numérique, le radiorécepteur numérique comprenant :
un circuit de réception pour recevoir un troisième signal numérique (S3) émis par le radioémetteur numérique ;
des moyens pour délivrer un deuxième signal numérique (S2) à une fréquence de symboles prédéterminée, le deuxième signal numérique (S2) comprenant une séquence de données pseudo-aléatoire ;
des moyens pour soustraire le deuxième signal numérique (S2) du troisième signal numérique (S3) afin de fournir un premier signal numérique (S1) ayant ladite fréquence de symboles prédéterminée ;
dans lequel les moyens pour délivrer le deuxième signal numérique (S2) sont adaptés pour délivrer plusieurs séquences de données pseudo-aléatoires courtes, les séquences de données pseudo-aléatoires courtes étant identiques à celles utilisées dans l'émetteur et étant fournies dans le même ordre que dans l'émetteur ; et
dans lequel les moyens pour délivrer le deuxième signal numérique (S2) sont adaptés pour passer par différentes séquences de données pseudo-aléatoires courtes à des instants prédéfinis, les instants prédéfinis étant identiques aux instants prédéfinis utilisés pour passer par différentes séquences de données pseudo-aléatoires courtes dans l'émetteur.
